# EUROPEAN PATENT SPECIFICATION

(11) **EP 3 097 654 B1**
(45) Date of publication and mention of the grant of the patent: **13.05.2020**
(21) Application number: 14879517.2
(22) Date of filing: 23.01.2014
(51) Int. Cl.: H04B 1/40, H04B 1/10, H04L 5/14, H04B 7/04, H04L 5/16

(54) **METHOD FOR FULL DUPLEX COMMUNICATIONS USING ARRAY OF ANTENNAS AND ASSOCIATED FULL DUPLEX WIRELESS COMMUNICATION DEVICE**
VERFAHREN ZUR VOLLDUPLEXKOMMUNIKATION UNTER VERWENDUNG VON ANTENNENARRAYS UND ZUGEHÖRIGE VOLLDUPLEX-FUNKKOMMUNIKATIONSVORRICHTUNG
PROCÉDÉ POUR DES COMMUNICATIONS DUPLEX INTÉGRAL À L'AIDE D'UN ENSEMBLE D'ANTENNES ET DISPOSITIF DE COMMUNICATION SANS FIL DUPLEX INTÉGRAL ASSOCIÉ

(43) Date of publication of application: 30.11.2016
(73) Proprietor: Telefonaktiebolaget LM Ericsson (publ), 164 83 Stockholm (SE)
(72) Inventor: WU, Yi, Beijing 100096 (CN); WANG, Yunfei, Mianyang Sichuan 621000 (CN); BUTOVITSCH, Paul Peter, Beijing 101300 (CN)
(74) Representative: Zacco Sweden AB
(86) International application number: PCT/CN2014/071212
(87) International publication number: WO 2015/109474

(56) References cited:
- WO-A1-02/063786
- WO-A1-2011/120349
- WO-A1-2014/000449
- CN-A- 101 390 295
- CN-A- 102 113 384
- US-A1- 2013 114 468

## Description

### TECHNICAL FIELD

The present disclosure generally relates to the technical field of wireless communications, and particularly, to a method implemented by a full duplex wireless communication device for communications using an array of antennas and the associated full duplex wireless communication device.

### BACKGROUND

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

In contrast with Time Division Duplex (TDD)/Frequency Division Duplex (FDD) communications which refer to sending and receiving data by a communication device at different time/frequency resource elements, full duplex communications refer to sending and receiving data by a communication device at the same time and frequency resource elements and allow for nearly twice the throughput of TDD/FDD communications.

In the prior art, for a wireless-enabled full duplex communication device equipped with an array of antennas, either an antenna sharing scheme or an antenna isolation scheme is applied to enhance the communication device's performances by virtue of the multiple antennas.

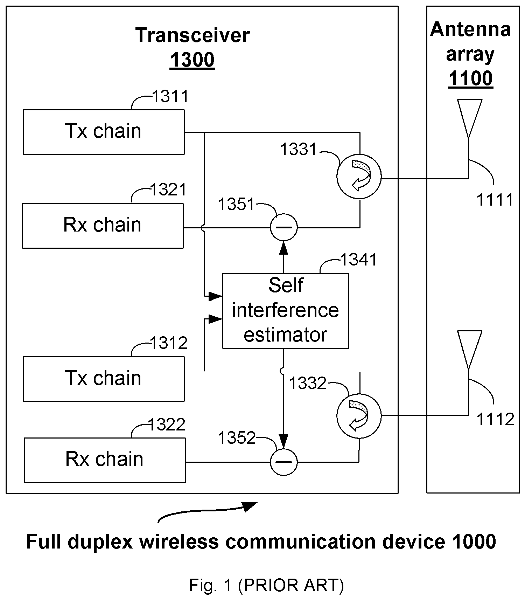

By way of example, Fig. 1 depicts a full duplex wireless communication device 1000 applying the antenna sharing scheme.

As illustrated, the communication device 1000 comprises a transceiver 1300 and an antenna array 1100. The transceiver 1300 comprises a first pair of a transmission chain 1311 and a reception chain 1321, a first circulator 1331, a first subtractor 1351, a second pair of a transmission chain 1312 and a reception chain 1322, a second circulator 1332, a second subtractor 1352 and a self interference estimator 1341. The antenna array 1100 comprises a first antenna 1111 and a second antenna 1112. The first antenna 1111 and the second antenna 1112 are connected, via the first circulator 1331 and the second circulator 1332, to the first pair of the transmission chain 1311 and the reception chain 1321 and the second pair or the transmission chain 1312 and the reception chain 1322, respectively.

For self-interference suppression (i.e., to suppress interference from the communication device 1000's transmission to its reception), the self-interference estimator 1341 receives signals transmitted to the antennas 1111 and 1112 from the transmission chains 1311 and 1312, estimates a self interference based on the signals and outputs the estimated self interference to the subtractors 1351 and 1352, where the estimated self interference is subtracted from signals transmitted to the reception chains 1321 and 1322 from the antennas 1111 and 1112. Recent research has shown that, for the antenna sharing scheme, a self-interference suppression ratio up to 110 dB is achievable (see Reference [1]).

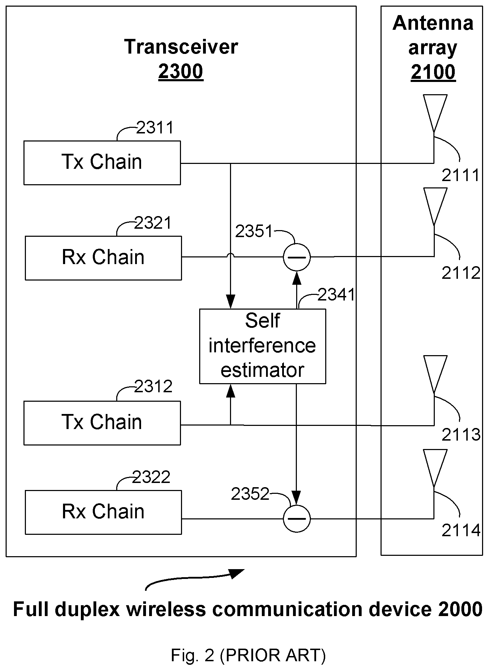

Fig. 2 is a block diagram of a full duplex wireless communication device 2000 applying the antenna isolation scheme.

As illustrated, the communication device 2000 comprises a transceiver 2300 and an antenna array 2100. The transceiver 2300 comprises a first pair of a transmission chain 2311 and a reception chain 2321, a first subtractor 2351, a second pair of a transmission chain 2312 and a reception chain 2322, a second subtractor 2352 and a self interference estimator 2341. The antenna array 2100 comprises four antennas 2111-2114. The antennas 2111-2114 are connected to the transmission chain 2311, the reception chain 2321, the transmission chain 2312 and the reception chain 2322, respectively.

For self-interference suppression (i.e., to suppress interference from the communication device 2000's transmission to its reception), the self-interference estimator 2341 receives signals transmitted to the antennas 2111 and 2113 from the transmission chains 2311 and 2312, estimates a self interference based on the signals and outputs the estimated self interference to the subtractors 2351 and 2352, where the estimated self interference is subtracted from signals transmitted to the reception chains 2321 and 2322 from the antennas 2112 and 2114.

In terms of antenna utilization efficiency, the antenna sharing scheme is superior to the antenna isolation scheme. This is apparent from the fact that the communication device 1000 illustrated in Fig. 1 comprises half the number of antennas required for the communication device 2000 illustrated in Fig. 2. In other words, if the communication device 1000 is equipped with the same number of antennas as required for the communication device 2000, the antennas may be used to provide additional spatial multiplexing and/or diversity gains.

On the other hand, the antenna isolation scheme is superior to the antenna sharing scheme in terms of self-interference suppression performance. As Reference [2] suggests, the antenna isolation scheme may provide an additional antenna isolation gain up to 40-50 dB.

In a constantly-varying wireless communication environment, neither a full duplex wireless communication device applying the antenna sharing scheme (e.g., the wireless communication device 1000 shown in Fig. 1) nor a full duplex wireless communication device applying the antenna isolation scheme (e.g., the wireless communication device 2000 shown in Fig. 2) performs well (e.g., achieve a high throughput) at all times.

Specifically, a full duplex wireless communication device applying the antenna sharing scheme can never benefit from antenna isolation, even under a wireless communication environment where it can obtain few or no spatial multiplexing and/or diversity gains. Likewise, a full duplex wireless communication device applying the antenna isolation scheme can never benefit from spatial multiplexing and/or diversity, even under a wireless communication environment where self interference is not serious and can be suppressed sufficiently without applying the antenna isolation scheme.

US 2015/071062 A1 (CHENG HONG [CN] ET AL) 12 March 2015, relates to a transmission mode selecting method. The document discloses that a transmission mode is selected according to a comparison result between a first system capacity and a second system capacity, where the system capacity refers to the total of bidirectional capacities of the communications equipment.

US 2013/114468 A1 (HUI DENNIS [US] ET AL) 9 May 2013, relates to self-interference cancellation for full-duplex radio communication.

### SUMMARY

The invention is defined by the independent claims. Embodiments of the invention are defined by the dependent claims.

Any aspect, embodiment, implementation, or example described in the following which does not fall within the scope of the claimed invention thus defined is to be interpreted as background information provided to facilitate the understanding of the claimed invention and the subject-matter for which protection is sought is strictly and solely limited to those embodiments encompassed by the scope of the appended claims.

An object of the present disclosure is to provide solutions for addressing at least one of the above-described shortcomings of the prior art full duplex wireless communication device applying either the antenna sharing scheme or the antenna isolation scheme.

According to a first aspect of the present disclosure, there is provided a method implemented by a full duplex wireless communication device for communications using an array of antennas. The method comprises switching an operation mode of the full duplex wireless communication device between an antenna sharing mode, in which each of the antennas is used for both transmission and reception at a same frequency band, and an antenna isolation mode, in which said each of the antennas is used for either transmission or reception at the frequency band or for both transmission and reception at non-overlapping frequency subbands. The method further comprises performing full duplex wireless communications in one of the antenna sharing mode and the antenna isolation mode.

According to a second aspect of the present disclosure, there is provided a full duplex wireless communication device, which comprises an array of antennas, a switch section and a transceiver. The switch section is configured to switch an operation mode of the full duplex wireless communication device between an antenna sharing mode, in which each of the antennas is used for both transmission and reception at the same frequency band, and an antenna isolation mode, in which said each of the antennas is used for either transmission or reception at the frequency band or for both transmission and reception at non-overlapping frequency subbands. The transceiver is configured to perform full duplex wireless communications in one of the antenna sharing mode and the antenna isolation mode.

Since the method and the full duplex wireless device according to the first and the second aspects of the present disclosure enable the operation mode of the full duplex wireless communication device to be switched between the antenna sharing mode and the antenna isolation mode, it is possible for the full duplex wireless communication device to flexibly adapt its operation mode to the constantly-varying wireless communication environment for achieving a better performance (e.g., a higher throughput) at all times.

### BRIEF DESCRIPTION OF THE DRAWINGS

The above and other objects, features, and advantages of the present disclosure will become apparent from the following descriptions on embodiments of the present disclosure with reference to the drawings, in which:
Fig. 1 is a block diagram illustrating a prior art full duplex wireless communication device applying an antenna sharing scheme;
Fig. 2 is a block diagram illustrating a prior art full duplex wireless communication device applying an antenna isolation scheme;
Fig. 3 is a flow chart illustrating a method implemented by a full duplex wireless communication device for communications using an array of antennas according to the present disclosure, wherein the full duplex wireless communication device is a terminal device;
Fig. 4 is a flow chart illustrating a method implemented by a full duplex wireless communication device for communications using an array of antennas according to the present disclosure, wherein the full duplex wireless communication device is a network node;
Figs. 5 and 6 are flow charts illustrating certain operations of the method shown in Fig. 4 according to the present disclosure;
Fig. 7 is a schematic diagram illustrating a structure of a full duplex wireless communication device according to the present disclosure;
Figs. 8 and 9 are schematic diagrams illustrating structures of certain modules of the full duplex wireless communication device according to the present disclosure;
Fig. 10 is a block diagram illustrating an antenna sharing mode and an antenna isolation mode of a full duplex wireless communication device according to a first embodiment of the present disclosure;
Fig. 11 is a block diagram illustrating an antenna sharing mode and an antenna isolation mode of a full duplex wireless communication device according to a second embodiment of the present disclosure;
Fig. 12 is a block diagram illustrating an antenna sharing mode of a full duplex wireless communication device according to a third, a fourth or a fifth embodiment of the present disclosure;
Fig. 13 is a block diagram illustrating an antenna isolation mode of the full duplex wireless communication device according to the third embodiment of the present disclosure;
Fig. 14 is a block diagram illustrating an antenna isolation mode of the full duplex wireless communication device according to the fourth embodiment of the present disclosure; and
Fig. 15 is a block a block diagram illustrating an antenna isolation mode of the full duplex wireless communication device according to the fifth embodiment of the present disclosure.

### DETAILED DESCRIPTION OF EMBODIMENTS

In the discussion that follows, specific details of particular embodiments of the present techniques are set forth for purposes of explanation and not limitation. It will be appreciated by those skilled in the art that other embodiments may be employed apart from these specific details. Furthermore, in some instances detailed descriptions of well-known methods, nodes, interfaces, circuits, and devices are omitted so as not obscure the description with unnecessary detail.

Those skilled in the art will appreciate that the functions described may be implemented in one or in several nodes. Some or all of the functions described may be implemented using hardware circuitry, such as analog and/or discrete logic gates interconnected to perform a specialized function, ASICs, PLAs, etc. Likewise, some or all of the functions may be implemented using software programs and data in conjunction with one or more digital microprocessors or general purpose computers. Where nodes that communicate using the air interface are described, it will be appreciated that those nodes also have suitable radio communications circuitry. Moreover, the technology can additionally be considered to be embodied entirely within any form of computer-readable memory, including non-transitory embodiments such as solid-state memory, magnetic disk, or optical disk containing an appropriate set of computer instructions that would cause a processor to carry out the techniques described herein.

Hardware implementations of the presently disclosed techniques may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Since various wireless systems may benefit from exploiting the ideas covered within this disclosure as will be appreciated by those skilled in the art, terms like "network node" and "terminal device" as used herein should be understood in a broad sense. Specifically, the network node should be understood to encompass a base station, a NodeB, an evolved NodeB, an access point, and the like. The terminal device should be understood to encompass a mobile telephone, a smartphone, a wireless-enabled tablet or personal computer, a wireless machine-to-machine unit, and the like.

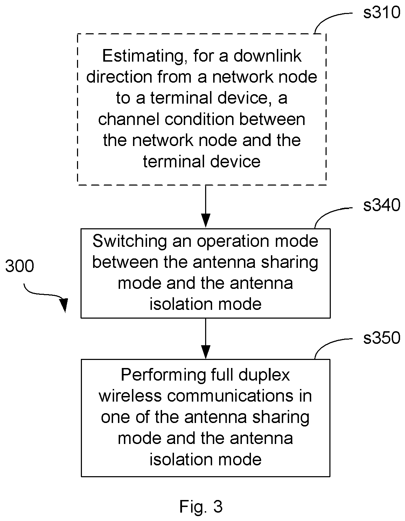

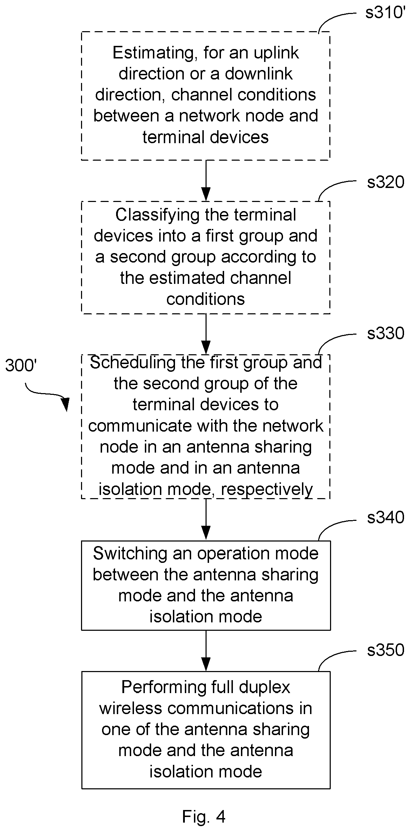

Initially, methods 300 and 300' implemented by a full duplex terminal device and a full duplex network node for communications using their respective arrays of antennas according to the present disclosure will be described with reference to Figs. 3 and 4, respectively.

As illustrated in Figs. 3 and 4, both of the methods 300 and 300' comprise switching an operation mode of the full duplex wireless communication device between an antenna sharing mode and an antenna isolation mode at step s340. Then, full duplex wireless communications are performed in one of the antenna sharing mode and the antenna isolation mode, at step 350.

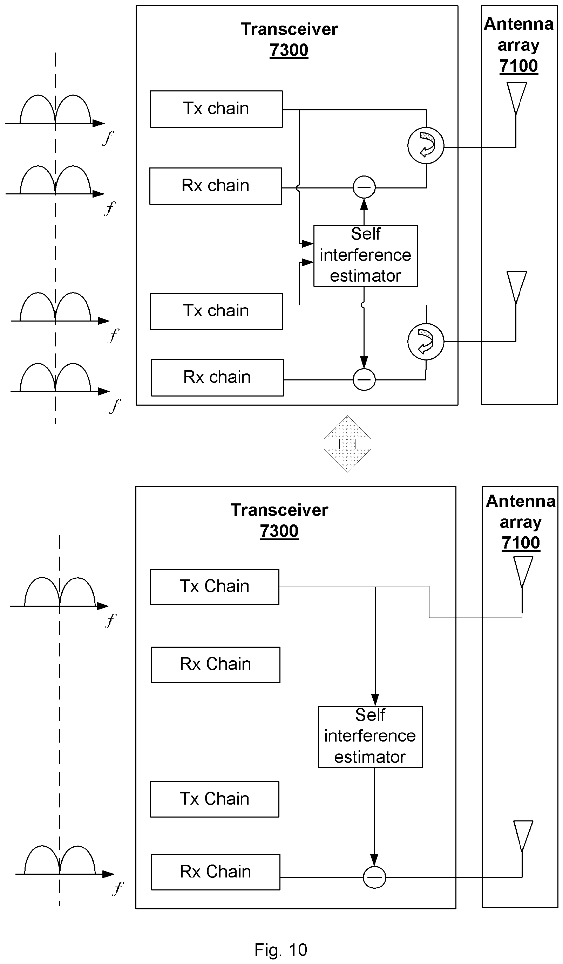

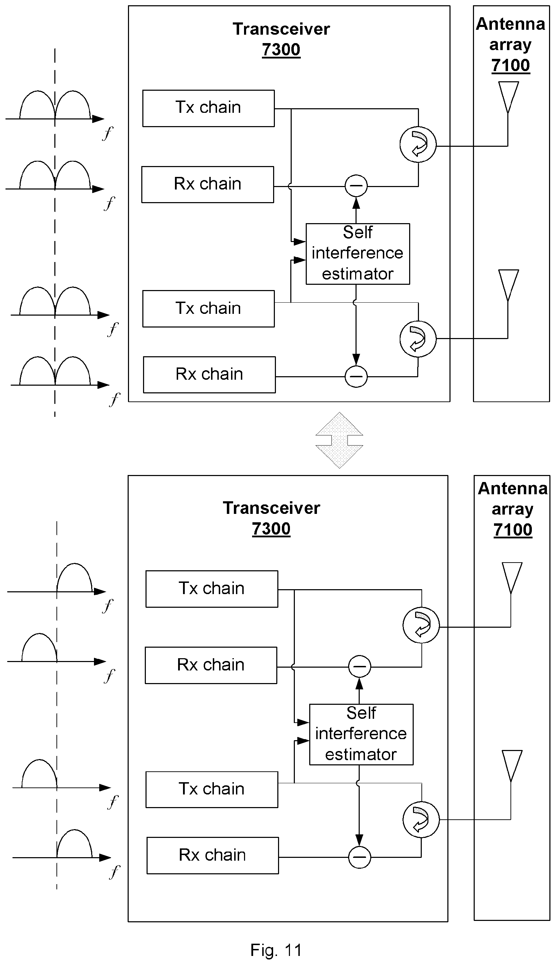

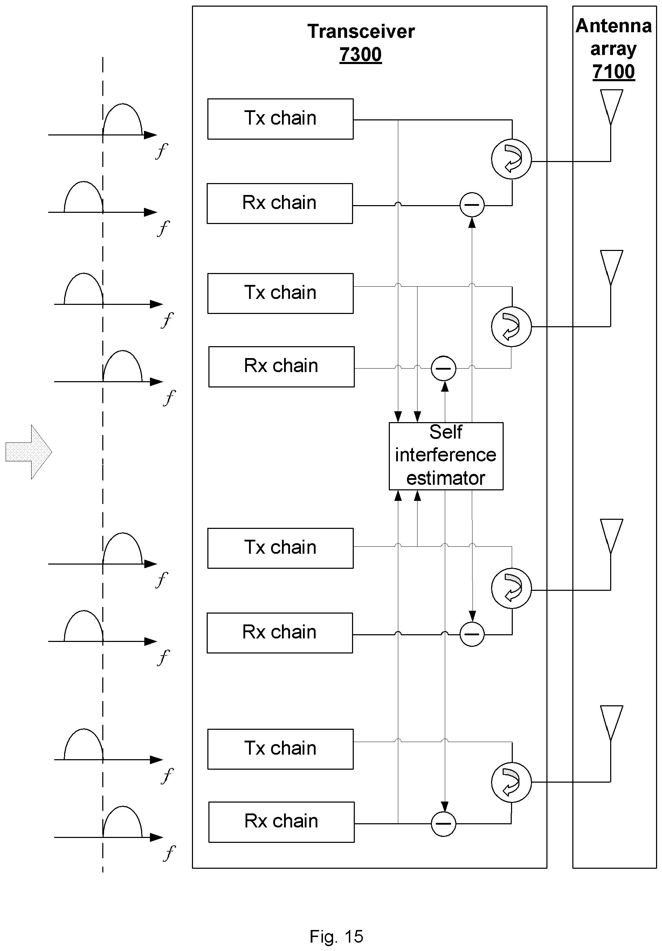

In the antenna sharing mode, each of the antennas is used for both transmission and reception at a same frequency band, as will be described in detail with respect to Figs. 10, 11 and 12. In the antenna isolation mode, each of the antennas may be used for either transmission or reception at the frequency band, as will be described in detail with respect to Figs. 10, 13 and 14. Alternatively, in the antenna isolation mode, each of the antennas may be used for both transmission and reception at non-overlapping frequency subbands, as will be described in detail with respect to Figs. 11 and 15.

Since the operation mode of the full duplex wireless communication device (i.e., the full duplex terminal device in the case of method 300 or the full duplex network node in the case of method 300') is allowed to be switched between the antenna sharing mode and the antenna isolation mode, it is possible for the full duplex wireless communication device to flexibly adapt its operation mode to a constantly-varying wireless communication environment for achieving a better performance (e.g., a higher throughput) at all times.

Preferably, in the antenna isolation mode, beamforming may be performed for transmission of signals from two or more of the device's antennas used for transmission, so that the signals can be destructively combined at one or more of the device's antennas used for reception. As such, an additional self-interference suppression gain of about 20 dB can be achieved for the full duplex wireless communication device. To facilitate the beamforming, the number of the antennas used for transmission may be set to be larger than the number of the antennas used for reception.

Optionally, the method 300 may further comprise estimating, for a downlink direction from a network node to the terminal device, a channel condition between the network node and the terminal device, at step s310. If the estimated channel condition is greater than a channel condition threshold, the operation mode of the terminal device is switched to the antenna sharing mode at step s340. Otherwise, the operation mode of the terminal device is switched to the antenna isolation mode.

In such a manner, when the terminal device experiences a good downlink channel condition (such as when the terminal device is near its serving network node), self interference at the terminal device is not serious, due to a relatively high level of wanted signals it receives and possibly its low transmission power, and can be sufficiently suppressed without applying the antenna isolation scheme. Meanwhile, the throughput at the terminal device can be significantly increased by employing high-rank spatial multiplexing in the antenna sharing mode.

On the other hand, when the terminal device experiences a poor channel condition (such as when the terminal device is far from its serving network node), high-rank spatial multiplexing cannot be supported and only a limited diversity gain can be achieved for higher reliability of data transmission, while a considerable self-interference suppression gain can be achieved in the antenna isolation mode to significantly improve the throughput at the terminal device.

Optionally, the method 300' may further comprise estimating, for an uplink direction from one or more terminal devices to the network node or a downlink direction from the network node to the terminal devices, channel conditions between the network node and the terminal devices, at step s310'. Then, at step s320, for the uplink direction or the downlink direction, the terminal devices are classified into a first group and a second group according to the estimated channel conditions, so that the channel conditions between the network node and the terminal devices in the first group are better than the channel conditions between the network node and the terminal devices in the second group. Next, at step s330, for the uplink direction or the downlink direction, the first group and the second group of the terminal devices are scheduled to communicate with the network node in the antenna sharing mode and in the antenna isolation mode, respectively.

By scheduling the first group of terminal devices with good channel conditions and the second group of terminal devices with bad channel conditions to communicate with the network node in the antenna sharing mode and in the antenna isolation mode respectively, an overall performance (e.g., an overall throughput) at the network node can be maximized for the uplink direction or the downlink direction.

In order for the network node to appropriately allocate radio resources for the antenna sharing mode and the antenna isolation mode according to their needs, the operation mode of the network node may be switched between the antenna sharing mode and the antenna isolation mode according to an operation mode duration ratio between the antenna sharing mode and the antenna isolation mode, and the operation mode duration ratio may be determined as a ratio between the number of terminal devices in the first group and the number of terminal devices in the second group.

Because terminal devices typically have very limited amounts of transmission power, whether the throughput at the network node for the uplink direction may be maximized in the antenna sharing mode or in the antenna isolation mode highly depends on signal qualities received at the network node. On the other hand, because the network node is less constrained in terms of transmission power, the throughput at the network node for the downlink direction can be always maximized by prioritizing high-rank spatial multiplexing in the antenna sharing mode. In view of these, different criteria for grouping terminal devices may be applied for the uplink direction and the downlink direction to maximize the throughput at the network node for the respective directions. Accordingly, each of the steps s310' and s320 of the method 300' may comprise respective substeps for the uplink direction and the downlink direction.

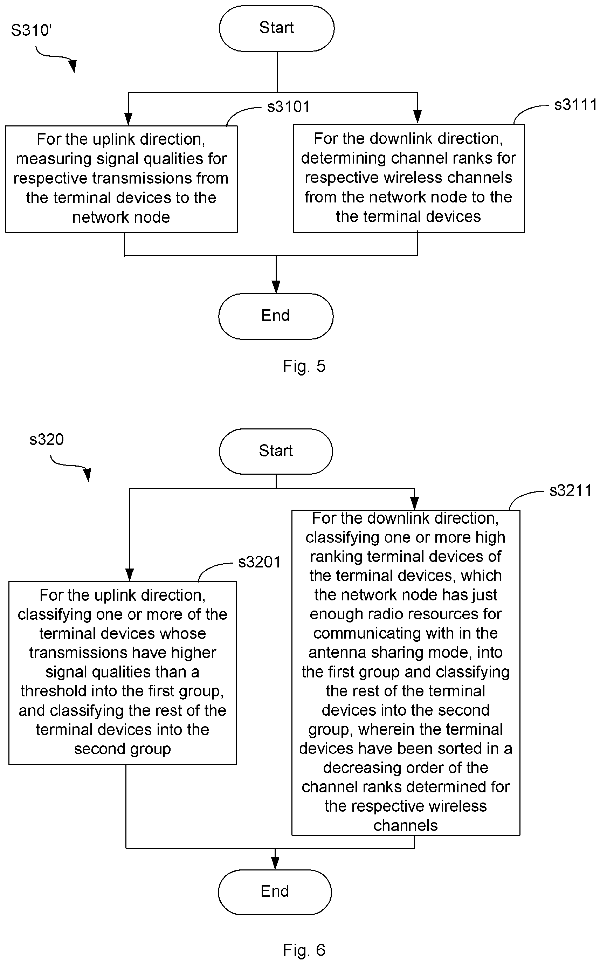

As illustrated in Fig. 5, the step s310' may comprise substeps s3101 and s3111. At substep s3101, signal qualities (such as Signal to Interference plus Noise Ratios (SINRs), Signal to Noise Ratios (SNRs), and the like) for respective transmissions from the terminal devices to the network node may be measured. At substep s3111, channel ranks for respective wireless channels from the network node to the terminal devices may be determined, for example, based on rank indicators and possibly Channel Quality Indicators (CQIs) reported from the terminal devices to the network node.

As illustrated in Fig. 6, the step s320 may comprise substeps s3201 and s3211. At substep s3201, one or more of the terminal devices whose transmissions have higher signal qualities than a threshold are classified into the first group, and the rest of the terminal devices are classified into the second group.

At substep s3211, the terminal devices are sorted in a decreasing order of the channel ranks determined for the respective wireless channels. Then, the first one or more of the sorted terminal devices, with which the network node has just enough radio resources for communicating in the antenna sharing mode, are classified into the first group and the rest of the terminal devices are classified into the second group. By way of example, for a network node having a maximum transmission power of 50w, the first three of the sorted terminal devices would be classified into the first group, supposing the transmission power required for simultaneous transmissions to the first three terminal devices is 45w while the transmission power required for simultaneous transmissions to the first four terminal devices is 55w.

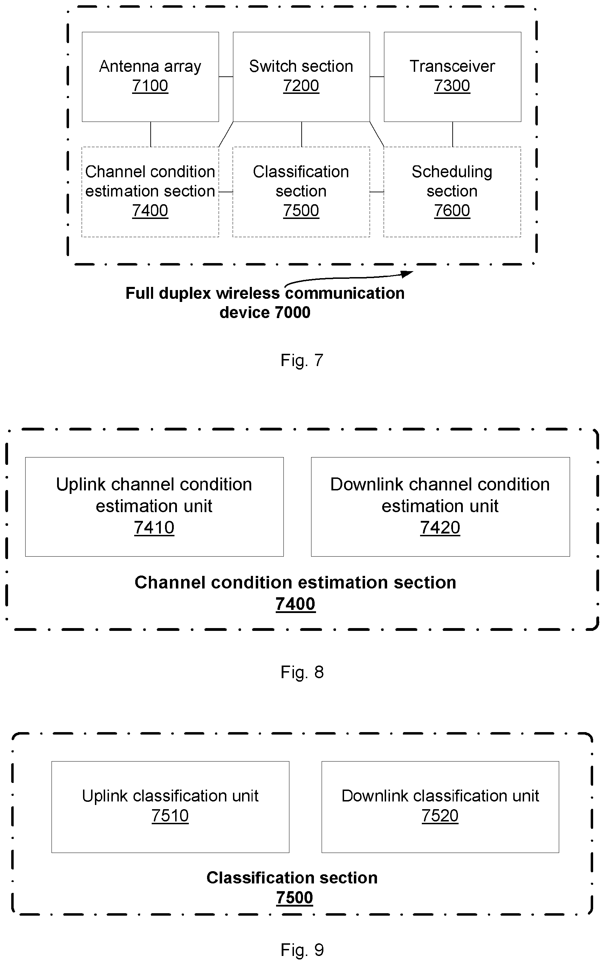

In the following, a structure of a full duplex wireless communication device 7000 according to the present disclosure will be described with reference to Figs. 7-9.

As illustrated in Fig. 7, the full duplex wireless communication device 7000 comprises an array of antennas 7100, a switch section 7200 and a transceiver 7300. The switch section 7200 is configured to switch an operation mode of the full duplex wireless communication device between an antenna sharing mode, in which each of the antennas is used for both transmission and reception at the same frequency band, and an antenna isolation mode, in which said each of the antennas is used for either transmission or reception at the frequency band or for both transmission and reception at non-overlapping frequency subbands. The transceiver 7300 is configured to perform full duplex wireless communications in one of the antenna sharing mode and the antenna isolation mode.

In an embodiment, the full duplex wireless device 7000 may be a terminal device and may further comprise a channel condition estimation section 7400. The channel condition estimation section 7400 may be configured to estimate, for a downlink direction from a network node to the terminal device, a channel condition between the network node and the terminal device. The switch section 7200 may be configured to switch the operation mode of the terminal device to the antenna sharing mode, if the estimated channel condition is greater than a channel condition threshold, and to switch the operation mode of the terminal device to the antenna isolation mode, if the estimated channel condition is not greater than the threshold.

In an embodiment, the full duplex wireless device 7000 may be a network node and may further comprise a channel condition estimation section 7400, a classification section 7500, and a scheduling section 7600. The channel condition estimation section 7400 may be configured to, for an uplink direction from one or more terminal devices to the network node or a downlink direction from the network node to the terminal devices, estimate channel conditions between the network node and the terminal devices. The classification section 7500 may be configured to, for the uplink direction or the downlink direction, classify the terminal devices into a first group and a second group according to the estimated channel conditions, so that the channel conditions between the network node and the terminal devices in the first group are better than the channel conditions between the network node and the terminal devices in the second group. The scheduling section 7600 may be configured to, for the uplink direction or the downlink direction, schedule the first group and the second group of the terminal devices to communicate with the network node in the antenna sharing mode and in the antenna isolation mode, respectively.

In this embodiment, the switch section 7200 may be configured to switch the operation mode of the network node between the antenna sharing mode and the antenna isolation mode according to an operation mode duration ratio between the antenna sharing mode and the antenna isolation mode, and the operation mode duration ratio is determined as a ratio between a number of terminal devices in the first group and a number of terminal devices in the second group.

The channel condition estimation section 7400 may comprise an uplink channel condition estimation unit 7410 or a downlink channel condition estimation unit 7420, as illustrated in Fig. 8. The uplink channel condition estimation unit 7410 may be configured to, for the uplink direction, measure signal qualities for respective transmissions from the terminal devices to the network node. The downlink channel condition estimation unit 7420 may be configured to, for the downlink direction, determine channel ranks for respective wireless channels from the network node to the terminal devices.

The classification section 7500 may comprise an uplink classification unit 7510 or a downlink classification unit 7520, as illustrated in Fig. 9. The uplink classification unit 7510 may be configured to, for the uplink direction, classify one or more of the terminal devices whose transmissions have higher signal qualities than a threshold into the first group and classify the rest of the correspondent wireless communication devices into the second group. The downlink classification unit 7520 may be configured to classify one or more high ranking terminal devices of the terminal devices, with which the network node has just enough radio resources for communicating in the antenna sharing mode, into the first group and classify the rest of the correspondent wireless communication devices into the second group, wherein the terminal devices have been sorted in a decreasing order of the channel ranks determined for the respective wireless channels.

As those skilled in the art will appreciate, the switch section 7200, the transceiver 7300, the channel condition estimation section 7400, the classification section 7500 and the scheduling section 7600 may be implemented separately as suitable dedicated circuits. Nevertheless, the above-described sections can also be implemented using any number of dedicated circuits through functional combination or separation. In some embodiments, the above-described sections may be even combined in a single application specific integrated circuit (ASIC).

As an alternative software-based implementation, the full duplex wireless communication device may comprise an antenna array, a memory and a processor (including but not limited to a microprocessor, a microcontroller or a Digital Signal Processor (DSP), etc.) The memory stores machine-readable program code executable by the processor to cause the full duplex wireless communication device to perform the above-described method 300 or 300'.

For the sake of illustration rather than limitation, five specific embodiments of the proposed full duplex wireless communication device will be described with respect to Figs. 10-15.

Fig. 10 is a block diagram illustrating a full duplex wireless communication device according to a first embodiment of the present disclosure, wherein the full duplex wireless communication device is equipped with two antennas.

As shown in the upper half of Fig. 10, each of the two antennas is used for both transmission and reception at a same frequency band, in an antenna sharing mode. Correspondingly, each of the two antennas wirelessly transmits signals received from one of two transmission chains at the frequency band and wirelessly receives signals to be transmitted to one of two reception chains at the frequency band.

In the lower half of Fig. 10, each of the two antennas is used for either transmission or reception at the frequency band, in an antenna isolation mode. Correspondingly, each of the two antennas either wirelessly transmits signals received from one of the two transmission chains at the frequency band or wirelessly receives signals to be transmitted to one of the two reception chains at the frequency band. This arrangement is particularly useful in a case where no power limit exists for the transmission and reception chains of the full duplex wireless communication device.

Fig. 11 is a block diagram illustrating a full duplex wireless communication device according to a second embodiment of the present disclosure, wherein the full duplex wireless communication device is equipped with two antennas. As shown in the upper half of Fig. 11, each of the two antennas is used for both transmission and reception at a same frequency band, in an antenna sharing mode. In the lower half of Fig. 11, each of the two antennas is used for both transmission and reception at non-overlapping frequency subbands (for example, the upper half and the lower half of the frequency band), in an antenna isolation mode. This arrangement is particularly useful in a case where a power limit exists for each of the transmission and reception chains of the full duplex wireless communication device.

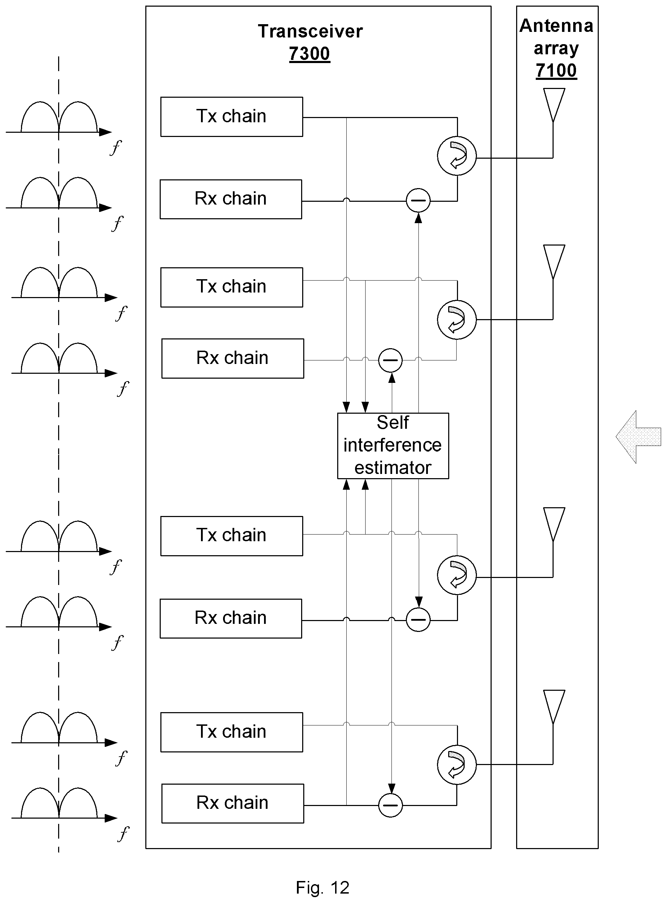

Fig. 12 is a block diagram illustrating an antenna sharing mode of a full duplex wireless communication device according to a third, a fourth or a fifth embodiment of the present disclosure, wherein the full duplex wireless communication device is equipped with four antennas and each of the four antennas is used for both transmission and reception at a same frequency band, in the antenna sharing mode.

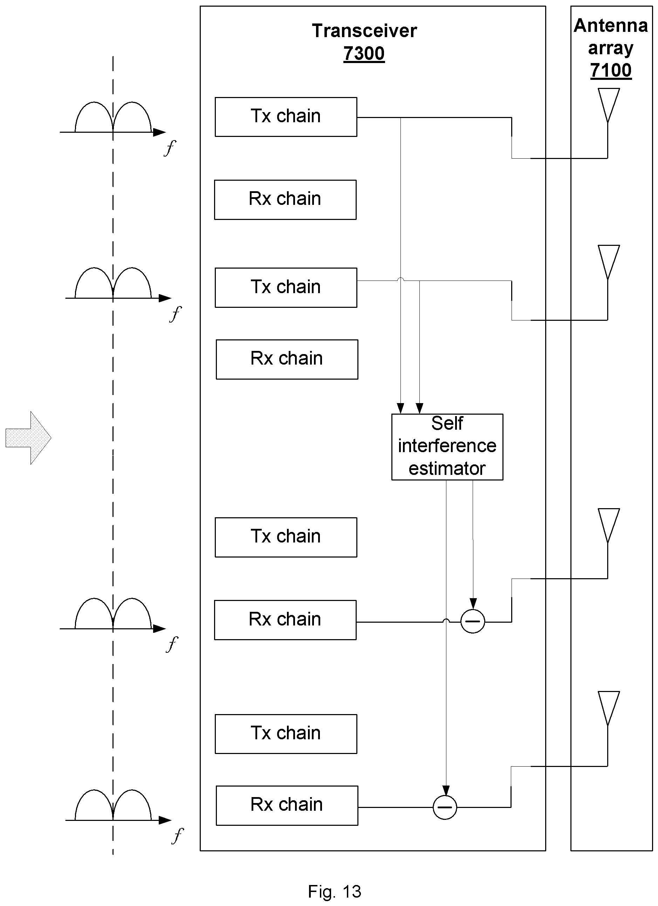

Fig. 13 is a block diagram illustrating an antenna isolation mode of a full duplex wireless communication device according to the third embodiment of the present disclosure, wherein each of the four antennas is used for either transmission or reception at the frequency band.

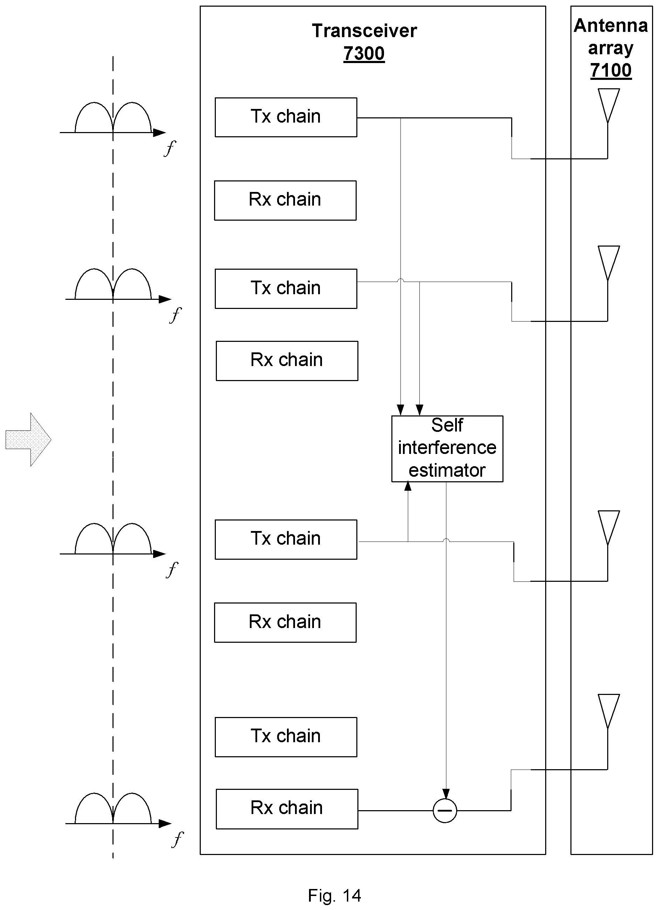

Fig. 14 is a block diagram illustrating an antenna isolation mode of a full duplex wireless communication device according to the fourth embodiment of the present disclosure, wherein each of the four antennas is used for either transmission or reception at the frequency band and the number of antennas used for transmission is higher than the number of antennas used for reception. As described in the above, this arrangement facilitates beamforming transmission of signals from the three antennas used for transmission, so that the signals can be destructively combined at the antenna used for reception. Accordingly, an additional self-interference suppression gain can be achieved for the full duplex wireless communication device.

Fig. 15 is a block a block diagram illustrating an antenna isolation mode of a full duplex wireless communication device according to the fifth embodiment of the present disclosure, wherein each of the four antennas is used for both transmission and reception at non-overlapping frequency subbands.

The present disclosure is described above with reference to the embodiments thereof. However, those embodiments are provided just for illustrative purpose, rather than limiting the present disclosure. The scope of the disclosure is defined by the attached claims. Those skilled in the art can make various alternations and modifications without departing from the scope of the disclosure, which all fall into the scope of the disclosure.

### REFERENCES

[1] Bharadia D, McMilin E, Katti S, "Full Duplex Radios," SIGCOMM'13, August 12-16, 2013, Hong Kong, China.
[2] M. Duarte, A. Sabharwal, "Full-duplex wireless communications using off-the-shelf radios: Feasibility and first results," Forty-Fourth Asilomar Conference on Signals, Systems, and Components, 2010.

## Claims

1. A method (300, 300') for full duplex communications, implemented by a full duplex wireless communication device for communications using an array of antennas, wherein full duplex communications refer to sending and receiving data by the wireless communication device at the same time and frequency resource elements, **characterized by**:
switching (s340) an operation mode of the full duplex wireless communication device between an antenna sharing mode, in which each of the antennas is used for both transmission and reception at a same frequency band, and an antenna isolation mode, in which said each of the antennas is used for either transmission or reception at the same frequency band; and
performing (s350) full duplex wireless communications in the other operation mode than the one of the antenna sharing mode and the antenna isolation mode from which the switching has been made.

2. The method (300) of claim 1, wherein the full duplex wireless communication device is a terminal device and the method further comprises:
estimating (s310), for a downlink direction from a network node to the terminal device, a channel condition between the network node and the terminal device, and
wherein the operation mode of the terminal device is switched to the antenna sharing mode if the estimated channel condition is greater than a channel condition threshold, and the operation mode of the terminal device is switched to the antenna isolation mode if the estimated channel condition is not greater than the threshold.

3. The method (300') of claim 1, wherein the full duplex wireless communication device is a network node and the method further comprises:
estimating (s310'), for an uplink direction from one or more terminal devices to the network node or a downlink direction from the network node to the terminal devices, channel conditions between the network node and the terminal devices, and
classifying (s320), for the uplink direction or the downlink direction, the terminal devices into a first group and a second group according to the estimated channel conditions, so that the channel conditions between the network node and the terminal devices in the first group are better than the channel conditions between the network node and the terminal devices in the second group; and
scheduling (s330), for the uplink direction or the downlink direction, the first group and the second group of the terminal devices to communicate with the network node in the antenna sharing mode and in the antenna isolation mode, respectively.

4. The method (300') of claim 3, wherein the operation mode of the network node is switched between the antenna sharing mode and the antenna isolation mode according to an operation mode duration ratio between the antenna sharing mode and the antenna isolation mode, and the operation mode duration ratio is determined as a ratio between a number of terminal devices in the first group and a number of terminal devices in the second group.

5. The method (300') of claim 3 or 4, wherein the estimating (s310) the channel conditions comprises:
for the uplink direction, measuring (s3101) signal qualities for respective transmissions from the terminal devices to the network node; or
for the downlink direction, determining (s3111) channel ranks for respective wireless channels from the network node to the terminal devices.

6. The method (300') of claim 5, wherein the channel ranks for the respective wireless channels are determined at least partially based on rank indicators respectively reported from the terminal devices to the network node.

7. The method (300') of any of claims 3-6, wherein the classifying (s320) the terminal devices comprises:
for the uplink direction,
classifying (s3201) one or more of the terminal devices whose transmissions have higher signal qualities than a threshold into the first group, and classifying the rest of the terminal devices into the second group, or
for the downlink direction,
classifying (s3211) one or more high ranking terminal devices of the terminal devices, with which the network node has just enough radio resources for communicating in the antenna sharing mode, into the first group and classifying the rest of the terminal devices into the second group, wherein the terminal devices have been sorted in a decreasing order of the channel ranks determined for the respective wireless channels.

8. The method (300, 300') of any of claims 1-7, wherein the full duplex wireless communication device comprises one or more transmission chains and one or more reception chains and wherein
in the antenna sharing mode, said each of the antennas wirelessly transmits signals received from one of the transmission chains at the same frequency band and wirelessly receives signals to be transmitted to one of the reception chains at the same frequency band;
in the antenna isolation mode,
said each of the antennas either wirelessly transmits signals received from one of the transmission chains at the frequency band or wirelessly receives signals to be transmitted to one of the reception chains at the frequency band,.

9. A full duplex wireless communication device (7000), comprising an array of antennas (7100) and configured to perform full duplex communications, wherein full duplex communications refer to sending and receiving data by the wireless communication device at the same time and frequency resource elements, **characterized by**:
a switch section (7200) configured to switch an operation mode of the full duplex wireless communication device between an antenna sharing mode, in which each of the antennas is used for both transmission and reception at the same frequency band, and an antenna isolation mode, in which said each of the antennas is used for either transmission or reception at the same frequency band; and
a transceiver (7300) configured to perform full duplex wireless communications, respectively, in the other operation mode than the one of the antenna sharing mode and the antenna isolation mode from which the switching has been made.

10. The full duplex wireless communication device (7000) of claim 9, wherein the full duplex wireless communication device (7000) is a terminal device and further comprises a channel condition estimation section (7400) configured to estimate, for a downlink direction from a network node to the terminal device, a channel condition between the network node and the terminal device, and
wherein the switch section (7200) is configured to
switch the operation mode of the terminal device to the antenna sharing mode, if the estimated channel condition is greater than a channel condition threshold, and
switch the operation mode of the terminal device to the antenna isolation mode, if the estimated channel condition is not greater than the threshold.

11. The full duplex wireless communication device (7000) of claim 9, wherein the full duplex wireless communication device (7000) is a network node and further comprises:
a channel condition estimation section (7400) configured to, for an uplink direction from one or more terminal devices to the network node or a downlink direction from the network node to the terminal devices, estimate channel conditions between the network node and the terminal devices;
a classification section (7500) configured to, for the uplink direction or the downlink direction, classify the terminal devices into a first group and a second group according to the estimated channel conditions, so that the channel conditions between the network node and the terminal devices in the first group are better than the channel conditions between the network node and the terminal devices in the second group; and
a scheduling section (7600) configured to, for the uplink direction or the downlink direction, schedule the first group and the second group of the terminal devices to communicate with the network node in the antenna sharing mode and in the antenna isolation mode, respectively.

12. The full duplex wireless communication device (7000) of claim 11, wherein the switch section (7200) is configured to switch the operation mode of the network node between the antenna sharing mode and the antenna isolation mode according to an operation mode duration ratio between the antenna sharing mode and the antenna isolation mode, and the operation mode duration ratio is determined as a ratio between a number of terminal devices in the first group and a number of terminal devices in the second group.

13. The full duplex wireless communication device (7000) of claim 11 or 12, wherein the channel condition estimation section (7400) comprises
an uplink channel condition estimation unit (7410) configured to, for the uplink direction, measure signal qualities for respective transmissions from the terminal devices to the network node; or
a downlink channel condition estimation unit (7420) configured to, for the downlink direction, determine channel ranks for respective wireless channels from the network node to the terminal devices.

14. The full duplex wireless communication device (7000) of any of claims 11-13, wherein the classification section (7500) comprises
an uplink classification unit (7510) configured to, for the uplink direction, classify one or more of the terminal devices whose transmissions have higher signal qualities than a threshold into the first group and classify the rest of the correspondent wireless communication devices into the second group, or
a downlink classification unit (7520) configured to classify one or more high ranking terminal devices of the terminal devices, with which the network node has just enough radio resources for communicating in the antenna sharing mode, into the first group and classify the rest of the correspondent wireless communication devices into the second group, wherein the terminal devices have been sorted in a decreasing order of the channel ranks determined for the respective wireless channels.

15. The full duplex wireless communication device (7000) of any of claims 9-14, wherein the transceiver (7300) comprises one or more transmission chains and one or more reception chains, and
in the antenna sharing mode, said each of the antennas (7100) is configured to wirelessly transmit signals received from one of the transmission chains at the same frequency band and wirelessly receive signals to be transmitted to one of the reception chains at the same frequency band;
in the antenna isolation mode,
said each of the antennas (7100) is configured to either wirelessly transmit signals received from one of the transmission chains at the frequency band or wirelessly receive signals to be transmitted to one of the reception chains at the frequency band.

## Patentansprüche

1. Verfahren (300, 300') für Vollduplex-Kommunikationen, das durch eine drahtlose Vollduplex-Kommunikationsvorrichtung für Kommunikationen unter Verwendung einer Antennenanordnung implementiert ist, wobei sich Vollduplex-Kommunikationen auf ein Senden und Empfangen von Daten durch die drahtlose Kommunikationsvorrichtung zur gleichen Zeit und auf Frequenz-Ressourcenelemente beziehen, **gekennzeichnet durch**:
Umschalten (s340) eines Betriebsmodus der drahtlosen Vollduplex-Kommunikationsvorrichtung zwischen einem Antennen-Sharing-Modus, in dem jede der Antennen sowohl zum Senden als auch Empfangen in einem gleichen Frequenzband verwendet wird, und einem Antennen-Isolationsmodus, in dem jede der Antennen entweder zum Senden oder zum Empfangen in dem gleichen Frequenzband verwendet wird; und
Ausführen (s350) von drahtlosen Vollduplex-Kommunikationen in dem anderen Betriebsmodus als der des Antennen-Sharing-Modus und des Antennen-Isolationsmodus, von dem aus das Umschalten gemacht wurde.

2. Verfahren (300) nach Anspruch 1, wobei die drahtlose Vollduplex-Kommunikationsvorrichtung ein Endgerät ist und das Verfahren ferner Folgendes umfasst:
Schätzen (s310), für eine Downlink-Richtung von einem Netzwerkknoten zu dem Endgerät, eines Kanalzustands zwischen dem Netzwerkknoten und dem Endgerät, und
wobei der Betriebsmodus des Endgeräts in den Antennen-Sharing-Modus geschaltet wird, wenn der geschätzte Kanalzustand größer als ein Kanalzustand-Schwellenwert ist, und der Betriebsmodus des Endgeräts in den Antennen-Isolationsmodus geschaltet wird, wenn der geschätzte Kanalzustand nicht größer als der Schwellenwert ist.

3. Verfahren (300') nach Anspruch 1, wobei die drahtlose Vollduplex-Kommunikationsvorrichtung ein Netzwerkknoten ist und das Verfahren ferner Folgendes umfasst:
Schätzen (s310'), für eine Uplink-Richtung von einem oder mehreren Endgeräten zu dem Netzwerkknoten oder eine Downlink-Richtung von dem Netzwerkknoten zu den Endgeräten, von Kanalzuständen zwischen dem Netzwerkknoten und den Endgeräten, und
Klassifizieren (s320), für die Uplink-Richtung oder die Downlink-Richtung, der Endgeräte in eine erste Gruppe und eine zweite Gruppe gemäß den geschätzten Kanalzuständen, sodass die Kanalzustände zwischen dem Netzwerkknoten und den Endgeräten in der ersten Gruppe besser sind als die Kanalzustände zwischen dem Netzwerkknoten und den Endgeräten in der zweiten Gruppe; und
Planen (s330), für die Uplink-Richtung oder die Downlink-Richtung, der ersten Gruppe und der zweiten Gruppe der Endgeräte, um mit dem Netzwerkknoten in dem Antennen-Sharing-Modus bzw. im Antennen-Isolationsmodus zu kommunizieren.

4. Verfahren (300') nach Anspruch 3, wobei der Betriebsmodus des Netzknotens zwischen dem Antennen-Sharing-Modus und dem Antennen-Isolationsmodus gemäß einem Betriebsmodus-Dauerverhältnis zwischen dem Antennen-Sharing-Modus und dem Antennen-Isolationsmodus umgeschaltet wird und das Betriebsmodus-Dauerverhältnis als ein Verhältnis zwischen einer Anzahl von Endgeräten in der ersten Gruppe und einer Anzahl von Endgeräten in der zweiten Gruppe bestimmt wird.

5. Verfahren (300') nach Anspruch 3 oder 4, wobei das Schätzen (s310) der Kanalzustände Folgendes umfasst:
für die Uplink-Richtung, Messen (s3101) von Signalqualitäten für die jeweiligen Übertragungen von den Endgeräten zu dem Netzknoten; oder
für die Downlink-Richtung, Bestimmen (s3111) von Kanalrängen für jeweilige drahtlose Kanäle von dem Netzwerkknoten zu den Endgeräten.

6. Verfahren (300') nach Anspruch 5, wobei die Kanalränge für die jeweiligen drahtlosen Kanäle mindestens teilweise basierend auf Rangindikatoren bestimmt werden, die jeweils von den Endgeräten an den Netzwerkknoten gemeldet werden.

7. Verfahren (300') nach einem der Ansprüche 3-6, wobei das Klassifizieren (s320) der Endgeräte Folgendes umfasst:
für die Uplink-Richtung,
ein oder mehrere der Endgeräte, deren Übertragungen höhere Signalqualitäten als ein Schwellenwert aufweisen, in die erste Gruppe zu klassifizieren (s3201) und den Rest der Endgeräte in die zweite Gruppe zu klassifizieren, oder
für die Downlink-Richtung,
Klassifizieren (s3211) eines oder mehrerer hochrangiger Endgeräte der Endgeräte, mit denen der Netzknoten gerade genug Funkressourcen zum Kommunizieren in dem Antennen-Sharing-Modus hat, in die erste Gruppe, und Klassifizieren des Rests der Endgeräte in die zweite Gruppe, wobei die Endgeräte in einer absteigenden Reihenfolge der Kanalränge, die für die jeweiligen drahtlosen Kanäle ermittelt werden, sortiert wurden.

8. Verfahren (300, 300') nach einem der Ansprüche 1-7, wobei die drahtlose Vollduplex-Kommunikationsvorrichtung eine oder mehrere Sendeketten und eine oder mehrere Empfangsketten umfasst und wobei
in dem Antennen-Sharing-Modus, jede der Antennen drahtlos Signale sendet, die von einer der Sendeketten in dem gleichen Frequenzband empfangen werden, und drahtlos Signale empfängt, die an eine der Empfangsketten in dem gleichen Frequenzband gesendet werden sollen;
in dem Antennen-Isolationsmodus,
jede der Antennen entweder drahtlos Signale sendet, die von einer der Sendeketten in dem Frequenzband empfangen werden, oder drahtlos Signale empfängt, die an eine der Empfangsketten in dem Frequenzband gesendet werden sollen.

9. Drahtlose Vollduplex-Kommunikationsvorrichtung (7000), umfassend eine Antennenanordnung (7100) und die konfiguriert ist, um Vollduplex-Kommunikationen auszuführen, wobei sich Vollduplex-Kommunikationen auf ein Senden und Empfangen von Daten durch die drahtlose Kommunikationsvorrichtung zur gleichen Zeit und auf Frequenz-Ressourcenelemente beziehen, **gekennzeichnet durch**:
einen Umschaltabschnitt (7200), der konfiguriert ist, um einen Betriebsmodus der drahtlosen Vollduplex-Kommunikationsvorrichtung zwischen einem Antennen-Sharing-Modus, in dem jede der Antennen sowohl zum Senden als auch Empfangen in dem gleichen Frequenzband verwendet wird, und einem Antennen-Isolationsmodus, in dem jede der Antennen entweder zum Senden oder zum Empfangen in dem gleichen Frequenzband verwendet wird; und
einen Sendeempfänger (7300), der konfiguriert ist, um eine drahtlose Vollduplex-Kommunikation jeweils in dem anderen Betriebsmodus als der des Antennen-Sharing-Modus und des Antennen-Isolationsmodus, von dem aus das Umschalten gemacht wurde, auszuführen.

10. Drahtlose Vollduplex-Kommunikationsvorrichtung (7000) nach Anspruch 9, wobei die drahtlose Vollduplex-Kommunikationsvorrichtung (7000) ein Endgerät ist und ferner einen Kanalzustand-Schätzungsabschnitt (7400) umfasst, der konfiguriert ist, um, für eine Downlink-Richtung von einem Netzwerkknoten zu dem Endgerät, einen Kanalzustand zwischen dem Netzwerkknoten und dem Endgerät zu schätzen, und wobei der Umschaltabschnitt (7200) zu Folgendem konfiguriert ist Umschalten des Betriebsmodus des Endgeräts in den Antennen-Sharing-Modus, wenn der geschätzte Kanalzustand größer als ein Kanalzustand-Schwellenwert ist, und
Umschalten des Betriebsmodus des Endgeräts in den Antennenisolationsmodus, wenn der geschätzte Kanalzustand nicht größer als der Schwellenwert ist.

11. Drahtlose Vollduplex-Kommunikationsvorrichtung (7000) nach Anspruch 9, wobei die drahtlose Vollduplex-Kommunikationsvorrichtung (7000) ein Netzwerkknoten ist und ferner Folgendes umfasst:
einen Kanalzustand-Schätzungsabschnitt (7400), der konfiguriert ist, um, für eine Uplink-Richtung von einem oder mehreren Endgeräten zu dem Netzwerkknoten oder eine Downlink-Richtung von dem Netzwerkknoten zu den Endgeräten, Kanalzustände zwischen dem Netzwerkknoten und den Endgeräten zu schätzen, und
einen Klassifizierungsabschnitt (7500), der konfiguriert ist, um, für die Uplink-Richtung oder die Downlink-Richtung, die Endgeräte gemäß den geschätzten Kanalzuständen zu klassifizieren, sodass die Kanalzustände zwischen dem Netzwerkknoten und den Endgeräten in der ersten Gruppe besser sind als die Kanalzustände zwischen dem Netzwerkknoten und den Endgeräten in der zweiten Gruppe; und
einen Planungsabschnitt (7600), der konfiguriert ist, um, für die Uplink-Richtung oder die Downlink-Richtung, die erste Gruppe und die zweite Gruppe der Endgeräte zu planen, um mit dem Netzwerkknoten in dem Antennen-Sharing-Modus bzw. im Antennen-Isolationsmodus zu kommunizieren.

12. Drahtlose Vollduplex-Kommunikationsvorrichtung (7000) nach Anspruch 11, wobei der Umschaltabschnitt (7200) konfiguriert ist, um den Betriebsmodus des Netzknotens zwischen dem Antennen-Sharing-Modus und dem Antennen-Isolationsmodus gemäß einem Betriebsmodus-Dauerverhältnis zwischen dem Antennen-Sharing-Modus und dem Antennen-Isolationsmodus umzuschalten, und das Betriebsmodus-Dauerverhältnis als ein Verhältnis zwischen einer Anzahl von Endgeräten in der ersten Gruppe und einer Anzahl von Endgeräten in der zweiten Gruppe bestimmt wird.

13. Drahtlose Vollduplex-Kommunikationsvorrichtung (7000) nach Anspruch 11 oder 12, wobei der Kanalzustand-Schätzungsabschnitt (7400) eine Uplinkkanal-Zustandsschätzungseinheit (7410) umfasst, die konfiguriert ist, um, für die Uplink-Richtung, Signalqualitäten für jeweilige Übertragungen von den Endgeräten zu dem Netzknoten zu messen; oder
eine Downlinkkanal-Zustandsschätzungseinheit (7420), die konfiguriert ist, um, für die Downlink-Richtung, Kanalränge für jeweilige drahtlose Kanäle von dem Netzwerkknoten zu den Endgeräten zu bestimmen.

14. Drahtlose Vollduplex-Kommunikationsvorrichtung (7000) nach einem der Ansprüche 11-13, wobei der Klassifizierungsabschnitt (7500) Folgendes umfasst
eine Uplink-Klassifizierungseinheit (7510), die konfiguriert ist, um, für die Uplink-Richtung, ein oder mehrere der Endgeräte, deren Übertragungen höhere Signalqualitäten als ein Schwellenwert aufweisen, in die erste Gruppe zu klassifizieren, und den Rest der entsprechenden drahtlosen Kommunikationsvorrichtungen in die zweite Gruppe zu klassifizieren, oder
eine Downlink-Klassifizierungseinheit (7520), die konfiguriert ist, um ein oder mehrere hochrangige Endgeräte der Endgeräte, mit denen der Netzknoten gerade genug Funkressourcen zum Kommunizieren in dem Antennen-Sharing-Modus aufweist, in die erste Gruppe zu klassifizieren, und den Rest der entsprechenden drahtlosen Kommunikationsgeräte in die zweite Gruppe zu klassifizieren, wobei die Endgeräte in einer absteigenden Reihenfolge der Kanalränge, die für die jeweiligen drahtlosen Kanäle ermittelt werden, sortiert wurden.

15. Drahtlose Vollduplex-Kommunikationsvorrichtung (7000) nach einem der Ansprüche 9-14, wobei der Sendeempfänger (7300) eine oder mehrere Sendeketten und eine oder mehrere Empfangsketten umfasst, und
in dem Antennen-Sharing-Modus jede der Antennen (7100) konfiguriert ist, um Signale, die von einer der Sendeketten in dem gleichen Frequenzband empfangen werden, drahtlos zu senden, und Signale, die an eine der Empfangsketten in dem gleichen Frequenzband gesendet werden sollen, drahtlos zu empfangen;
in dem Antennen-Isolationsmodus,
jede der Antennen (7100) konfiguriert ist, um entweder Signale, die von einer der Sendeketten in dem Frequenzband empfangen werden, drahtlos zu senden oder Signale, die an eine der Empfangsketten in dem Frequenzband gesendet werden sollen, drahtlos zu empfangen.

## Revendications

1. Procédé (300, 300') pour communications duplex intégral, mis en œuvre par un dispositif de communication sans fil duplex intégral utilisant un réseau d'antennes, dans lequel des communications duplex intégral se rapportent à l'envoi et la réception de données par le dispositif de communication sans fil en même temps et avec les mêmes éléments de ressource de fréquence, **caractérisé par** :
la commutation (s340) d'un mode de fonctionnement du dispositif de communication sans fil duplex intégral entre un mode de partage d'antenne, dans lequel chacune des antennes est utilisée à la fois pour la transmission et la réception dans une même bande de fréquence, et un mode d'isolement d'antenne, dans lequel chacune des antennes est utilisée soit pour la transmission, soit pour la réception dans la même bande de fréquence ; et
la réalisation (s350) de communications sans fil duplex intégral dans l'autre mode de fonctionnement que celui parmi le mode de partage d'antenne et le mode d'isolement d'antenne à partir duquel la commutation a été effectuée.

2. Procédé (300) de la revendication 1, dans lequel le dispositif de communication sans fil duplex intégral est un dispositif terminal et le procédé comprend en outre :
l'estimation (s310), pour une direction en liaison descendante à partir d'un nœud de réseau jusqu'au dispositif terminal, d'une condition de canaux entre le nœud de réseau et le dispositif terminal, et
dans lequel le mode de fonctionnement du dispositif terminal est commuté vers le mode de partage d'antenne si la condition de canaux estimée est supérieure à un seuil de condition de canaux, et le mode de fonctionnement du dispositif terminal est commuté vers le mode d'isolement d'antenne si la condition de canaux estimée n'est pas supérieure au seuil.

3. Procédé (300') de la revendication 1, dans lequel le dispositif de communication sans fil duplex intégral est un nœud de réseau et le procédé comprend en outre :
l'estimation (s310'), pour une direction en liaison ascendante à partir d'un ou de plusieurs dispositifs terminaux jusqu'au nœud de réseau ou une direction en liaison descendante à partir du nœud de réseau jusqu'aux dispositifs terminaux, de conditions de canaux entre le nœud de réseau et les dispositifs terminaux, et
la classification (s320), pour la direction en liaison descendante ou la direction en liaison ascendante, des dispositifs terminaux en un premier groupe et un deuxième groupe en fonction des conditions de canaux estimées, de telle sorte que les conditions de canaux entre le nœud de réseau et les dispositifs terminaux dans le premier groupe soient meilleures que les conditions de canaux entre le nœud de réseau et les dispositifs terminaux dans le deuxième groupe ; et
la planification (s330), pour la direction en liaison ascendante ou la direction en liaison descendante, de la communication du premier groupe et du deuxième groupe de dispositifs terminaux avec le nœud de réseau dans le mode de partage d'antenne et dans le mode d'isolement d'antenne, respectivement.

4. Procédé (300') de la revendication 3, dans lequel le mode de fonctionnement du nœud de réseau est commuté entre le mode de partage d'antenne et le mode d'isolement d'antenne en fonction d'un rapport de durée de mode de fonctionnement entre le mode de partage d'antenne et le mode d'isolement d'antenne, et le rapport de durée de mode de fonctionnement est déterminé comme un rapport entre un nombre de dispositifs terminaux dans le premier groupe et un nombre de dispositifs terminaux dans le deuxième groupe.

5. Procédé (300') de la revendication 3 ou 4, dans lequel l'estimation (s310) des conditions de canaux comprend :
pour la direction en liaison ascendante, la mesure (s3101) de qualités de signal pour des transmissions respectives depuis les dispositifs terminaux jusqu'au nœud de réseau ; ou
pour la direction en liaison descendante, la détermination (s3111) de rangs de canaux pour des canaux sans fil respectifs depuis le nœud de réseau jusqu'aux dispositifs terminaux.

6. Procédé (300') de la revendication 5, dans lequel les rangs de canaux pour les canaux sans fil respectifs sont déterminés au moins partiellement sur la base d'indicateurs de rang respectivement rapportés depuis les dispositifs terminaux jusqu'au nœud de réseau.

7. Procédé (300') de l'une quelconque des revendications 3 à 6, dans lequel la classification (s320) des dispositifs terminaux comprend :
pour la direction en liaison ascendante,
la classification (s3201) d'un ou de plusieurs des dispositifs terminaux dont les transmissions ont des qualités de signaux plus élevées qu'un seuil dans le premier groupe, et la classification du reste des dispositifs terminaux dans le deuxième groupe, ou
pour la direction en liaison descendante,
la classification (s3211) d'un ou de plusieurs dispositifs terminaux de rang élevé des dispositifs terminaux, avec lesquels le nœud de réseau a juste suffisamment de ressources radio pour communiquer dans le mode de partage d'antenne, dans le premier groupe, et la classification du reste des dispositifs terminaux dans le deuxième groupe, les dispositifs terminaux ayant été triés dans un ordre décroissant des rangs de canaux déterminés pour les canaux sans fil respectifs.

8. Procédé (300, 300') de l'une quelconque des revendications 1 à 7, dans lequel le dispositif de communication sans fil duplex intégral comprend une ou plusieurs chaînes de transmission et une ou plusieurs chaînes de réception, et dans lequel dans le mode de partage d'antenne, lesdites chacune des antennes transmettent sans fil des signaux reçus depuis une des chaînes de transmission dans la même bande de fréquence et reçoivent sans fil des signaux à transmettre à une des chaînes de réception dans la même bande de fréquence ;
dans le mode d'isolement d'antenne,
lesdites chacune des antennes soit transmettent sans fil des signaux reçus depuis une des chaînes de transmission dans la bande de fréquence, soit reçoivent sans fil des signaux à transmettre à une des chaînes de réception dans la bande de fréquence.

9. Dispositif de communication sans fil duplex intégral (7000), comprenant un réseau d'antennes (7100) et configuré pour réaliser des communications duplex intégral, dans lequel des communications duplex intégral se rapportent à l'envoi et la réception de données par le dispositif de communication sans fil en même temps et avec les mêmes éléments de ressource de fréquence, **caractérisé par** :
une section de commutation (7200) configurée pour commuter un mode de fonctionnement du dispositif de communication sans fil duplex intégral entre un mode de partage d'antenne, dans lequel chacune des antennes est utilisée à la fois pour la transmission et la réception dans une même bande de fréquence, et un mode d'isolement d'antenne, dans lequel chacune des antennes est utilisée soit pour la transmission, soit pour la réception dans la même bande de fréquence ; et
un émetteur-récepteur (7300) configuré pour réaliser des communications sans fil duplex intégral, respectivement, dans l'autre mode de fonctionnement que celui parmi le mode de partage d'antenne et le mode d'isolement d'antenne à partir duquel la commutation a été effectuée.

10. Dispositif de communication sans fil duplex intégral (7000) de la revendication 9, dans lequel le dispositif de communication sans fil duplex intégral (7000) est un dispositif terminal et comprend en outre une section d'estimation de condition de canaux (7400) configurée pour estimer, pour une direction en liaison descendante à partir d'un nœud de réseau jusqu'au dispositif terminal, une condition de canaux entre le nœud de réseau et le dispositif terminal, et
dans lequel la section de commutation (7200) est configurée pour commuter le mode de fonctionnement du dispositif terminal vers le mode de partage d'antenne si la condition de canaux estimée est supérieure à un seuil de condition de canaux, et
commuter le mode de fonctionnement du dispositif terminal vers le mode d'isolement d'antenne si la condition de canaux estimée n'est pas supérieure au seuil.

11. Dispositif de communication sans fil duplex intégral (7000) de la revendication 9, dans lequel le dispositif de communication sans fil duplex intégral (7000) est un nœud de réseau et comprend en outre :
une section d'estimation de condition de canaux (7400) configurée pour, pour une direction en liaison ascendante à partir d'un ou de plusieurs dispositifs terminaux jusqu'au nœud de réseau ou une direction en liaison descendante à partir du nœud de réseau jusqu'aux dispositifs terminaux, estimer des conditions de canaux entre le nœud de réseau et les dispositifs terminaux ;
une section de classification (7500) configurée pour, pour la direction en liaison descendante ou la direction en liaison ascendante, classifier les dispositifs terminaux en un premier groupe et un deuxième groupe en fonction des conditions de canaux estimées, de telle sorte que les conditions de canaux entre le nœud de réseau et les dispositifs terminaux dans le premier groupe soient meilleures que les conditions de canaux entre le nœud de réseau et les dispositifs terminaux dans le deuxième groupe ; et
une section de planification (7600) configurée pour, pour la direction en liaison ascendante ou la direction en liaison descendante, planifier la communication du premier groupe et du deuxième groupe de dispositifs terminaux avec le nœud de réseau dans le mode de partage d'antenne et dans le mode d'isolement d'antenne, respectivement.

12. Dispositif de communication sans fil duplex intégral (7000) de la revendication 11, dans lequel la section de commutation (7200) est configurée pour commuter le mode de fonctionnement du nœud de réseau entre le mode de partage d'antenne et le mode d'isolement d'antenne en fonction d'un rapport de durée de mode de fonctionnement entre le mode de partage d'antenne et le mode d'isolement d'antenne, et le rapport de durée de mode de fonctionnement est déterminé comme un rapport entre un nombre de dispositifs terminaux dans le premier groupe et un nombre de dispositifs terminaux dans le deuxième groupe.

13. Dispositif de communication sans fil duplex intégral (7000) de la revendication 11 ou 12, dans lequel la section d'estimation de condition de canaux (7400) comprend
une unité d'estimation de condition de canaux en liaison ascendante (7410) configurée pour, pour la direction en liaison ascendante, mesurer des qualités de signal pour des transmissions respectives depuis les dispositifs terminaux jusqu'au nœud de réseau ; ou
une unité d'estimation de condition de canaux en liaison descendante (7420) configurée pour, pour la direction en liaison descendante, déterminer des rangs de canaux pour des canaux sans fil respectifs depuis le nœud de réseau jusqu'aux dispositifs terminaux.

14. Dispositif de communication sans fil duplex intégral (7000) de l'une quelconque des revendications 11 à 13, dans lequel la section de classification (7500) comprend
une unité de classification en liaison ascendante (7510) configurée pour, pour la direction en liaison ascendante, classifier un ou de plusieurs des dispositifs terminaux dont les transmissions ont des qualités de signaux plus élevées qu'un seuil dans le premier groupe, et classifier le reste des dispositifs de communication sans fil correspondants dans le deuxième groupe, ou
une unité de classification en liaison descendante (7520) configurée pour classifier un ou plusieurs dispositifs terminaux de rang élevé des dispositifs terminaux, avec lesquels le nœud de réseau a juste suffisamment de ressources radio pour communiquer dans le mode de partage d'antenne, dans le premier groupe, et classifier le reste des dispositifs de communication sans fil correspondants dans le deuxième groupe, les dispositifs terminaux ayant été triés dans un ordre décroissant des rangs de canaux déterminés pour les canaux sans fil respectifs.

15. Dispositif de communication sans fil duplex intégral (7000) de l'une quelconque des revendications 9 à 14, dans lequel l'émetteur-récepteur (7300) comprend une ou plusieurs chaînes de transmission et une ou plusieurs chaînes de réception, et dans le mode de partage d'antenne, lesdites chacune des antennes (7100) sont configurées pour transmettre sans fil des signaux reçus depuis une des chaînes de transmission dans la même bande de fréquence et recevoir sans fil des signaux à transmettre à une des chaînes de réception dans la même bande de fréquence ; dans le mode d'isolement d'antenne,
lesdites chacune des antennes (7100) sont configurées soit pour transmettre sans fil des signaux reçus depuis une des chaînes de transmission dans la bande de fréquence, soit recevoir sans fil des signaux à transmettre à une des chaînes de réception dans la bande de fréquence.
